# EUROPEAN PATENT SPECIFICATION

(11) **EP 1 979 183 B1**
(45) Date of publication and mention of the grant of the patent: **05.06.2013**
(21) Application number: 06732799.9
(22) Date of filing: 04.04.2006
(51) Int. Cl.: B60J 5/04

(54) **MANUFACTURING METHOD OF AN AUTOMOBILE IMPACT BEAM WITH INTEGRATED BRACKETS**
HERSTELLUNGSVERFAHREN FÜR EINEN AUTOAUFPRALLSCHUTZ MIT INTEGRIERTEN HALTERUNGEN
PROCÉDÉ DE FABRICATION D'UNE POUTRE D'IMPACT DE VÉHICULE AUTOMOBILE À SUPPORTS INTÉGRÉS

(30) Priority: 02.02.2006 KR 20060010170; 02.02.2006 KR 20060010171
(43) Date of publication of application: 15.10.2008
(73) Proprietor: Dongwon Metal Ind.Co.Ltd., Kyungsan-si Kyungsangbuk-do 712-835 (KR)
(72) Inventor: LEE, Eun-Woo, Daegu 706-040 (KR)
(74) Representative: Grünecker, Kinkeldey, Stockmair & Schwanhäusser
(86) International application number: PCT/KR2006/001232
(87) International publication number: WO 2007/089057

(56) References cited:
- JP-A- 04 238 725
- JP-A- 04 238 726
- JP-A- 04 238 727
- JP-A- 04 260 815
- JP-A- 07 032 880
- JP-A- 07 112 612
- JP-A- 10 000 935
- JP-A- 2005 335 685
- JP-U- 62 078 519
- KR-U- 19980 021 236
- US-A1- 2001 038 231
- US-B1- 6 227 609

## Description

### Technical Field

The present invention relates, in general, to a method of manufacturing an automobile impact beam integrated with brackets to be fastened to an automobile.

### Background Art

Nowadays, worldwide automobile manufacturers are installing a steel reinforcing member, such as an impact beam, in a door so as to enhance the rigidity of an automobile.

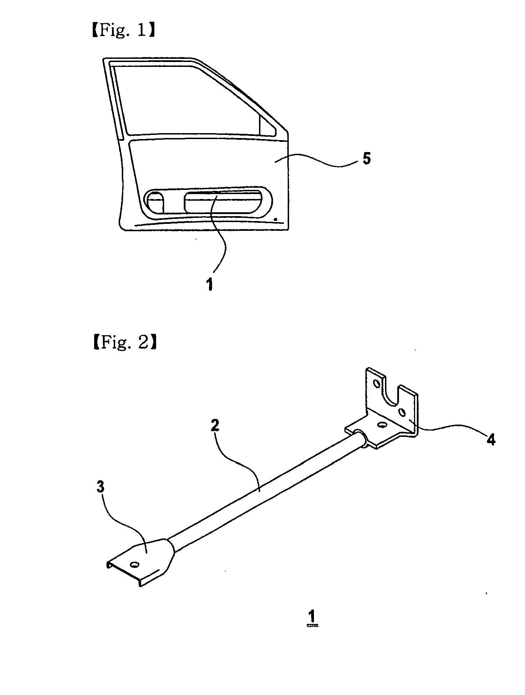

Among the types of steel reinforcing member for automobiles, an impact beam is mounted between an inner plate and an outer plate of an automobile door 5, as shown in FIG. 1. The impact beam mounted in this way minimizes the deformation of and damage to an automobile body, due to impacts caused in broadside collisions between automobiles, thus minimizing injury to a driver or to passengers.

As described above, the impact beam for automobiles is usually made of a high-tension steel plate which is formed to have a wave shape. However, recently, in order to achieve the lightness of an automobile and increase the fuel efficiency of the automobile, the impact beam is manufactured using a hollow steel pipe to have high impact resistance and superior ability to absorb impacts.

FIG. 2 is a perspective view showing the conventional impact beam, which is constructed as described above and is disclosed in Korean Patent Publication No.1994-3248.

As shown in FIG. 2, the conventional impact beam 1 manufactured using the hollow steel pipe includes a body 2 comprising a hollow steel pipe. Brackets 3 and 4 are provided on opposite ends of the body 2, and are attached to the inner plate or an inner surface of the outer plate of the door 5. Generally, after the brackets 3 and 4 are manufactured through an additional manufacturing operation, the brackets 3 and 4 are welded to the body 2.

That is, the conventional impact beam 1 for automobiles is problematic in that at least two brackets 3 and 4 must be separately manufactured to attach the impact beam 1 to the inner side of the automobile door 5, so that the operation of welding the brackets must be added to the automobile manufacturing process, thus undesirably increasing the number of operations. Further, the deformation caused by the welding operation affects the quality and rigidity of a product. Furthermore, the brackets 3 and 4 are separately installed, thus increasing the weight of an automobile.

JP 07032880 discloses an impact beam for an automobile door and a method for manufacturing same. A corresponding bracket part is integrally formed with a tubular beam part and a width of a bracket part is made larger than a circumferential length of the tubular beam part. A wall thickness is formed in a dimension thinner than the thickness of the tubular beam part. By such means a sufficient spot welding area is said to be obtained and sufficient strength is secured in lightweight.

### Disclosure of the Invention

### Technical tasks to be solved by the invention

Accordingly, the present invention has been made keeping in mind the above problems occurring in the prior art, and an object of the present invention is to provide an increased strength of the impact beam with decreased weight and to easy by manufacture the impact beam.

### Technical Solution

In order to accomplish the object, the present invention provides a method of manufacturing an automobile impact beam with the features of claim 1. An advantageous embodiment is disclosed by claim 2.

### Advantageous Effects

As described above an automobile impact beam is manufactured according to the present invention so that an area of a member forming a bracket is expanded preferably through hydro-forming, is cut and thereafter is pressed or, alternatively, pressed and then cut, and thus the bracket is integrated with the impact beam in a single structure. As a result, the operation of mounting a separately manufactured bracket to a body of the impact beam is not required, thus minimizing the number of parts and the working period which are required for the manufacture and assembly of the impact beam.

Further, in an impact beam for automobiles according to the present invention, a hollow steel pipe is processed through heat treatment, so that impact resistance and the ability to absorb impacts are improved, thus enhancing stability and realizing lightness, therefore maximizing fuel efficiency.

### Brief Description of Drawings

FIG. 1 is a view showing the state where a conventional impact beam for automobiles is mounted to an automobile door;
FIG. 2 is a perspective view showing the conventional impact beam for automobiles;
FIG. 3 is a perspective view showing an automobile impact beam integrated with brackets;
FIG. 4 is a flowchart illustrating a method of manufacturing the automobile impact beam integrated with the brackets;
FIG. 5 is a perspective view showing the impact beam, after completion of heat treatment of FIG. 4;
FIG. 6 is a perspective view showing the impact beam, after completion of a shearing step of FIG. 4;
FIG. 7 is a view showing an expanding step of FIG. 4;
FIG. 8 is a perspective view showing the impact beam, when support ribs are provided on a bracket which has been fabricated;
FIG. 9 is a perspective view showing another automobile impact beam integrated with a bracket;
FIG. 10 is a perspective view showing an automobile impact beam integrated with brackets through expanding and pressing;
FIG. 11 is a flowchart illustrating a method of manufacturing the automobile impact beam integrated with brackets through expanding and pressing;
FIG. 12 is a perspective view showing a hollow steel pipe used to make the impact beam, after completion of heat treatment of FIG. 11;
FIG. 13 is a perspective view showing the state where parts of the hollow steel pipe forming the brackets are expanded, after completion of heat treatment of FIG. 11;
FIG. 14 is a perspective view showing part of an impact beam having a bracket which is formed through pressing, after completion of the expanding step of FIG. 13; and
FIG. 15 is a perspective view showing the impact beam, when support ribs are provided on the bracket after fabrication thereof.

### Best Mode for Carrying Out the Invention

Hereinafter, the present invention will be described in detail with reference to the accompanying drawings.

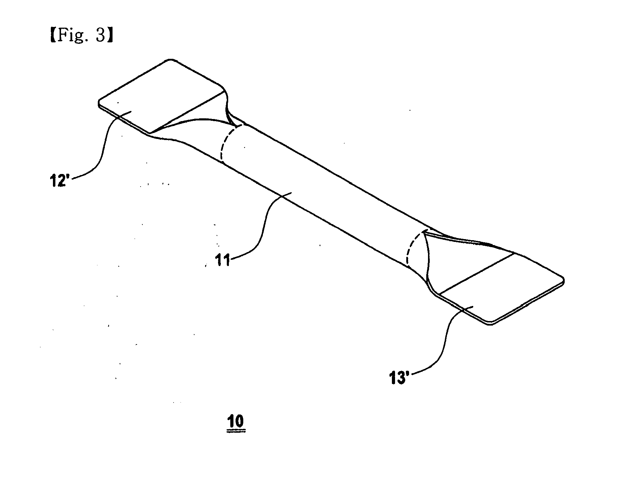

As shown in FIG. 3, the automobile impact beam 10 comprises a hollow steel pipe, and brackets 12' and 13' are integrated with opposite ends of the hollow steel pipe. An area provided between the brackets 12' and 13' forms a body 11.

In order to reduce the weight of the impact beam 10, the impact beam 10 is manufactured from a hollow steel pipe. The impact beam 10 is not limited to a specific cross-section, but it is preferable that the impact beam 10 has a circular or elliptical cross-section. More preferably, the impact beam has an elliptical cross-section so as to have high impact resistance and superior ability to absorb impacts. Further, the body 11 is heat treated so as to maximize rigidity and impact absorbing ability.

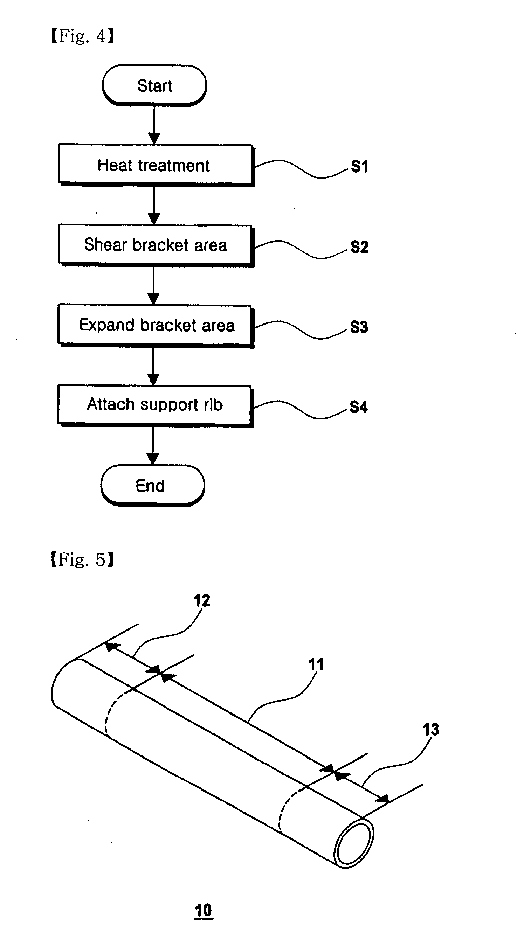

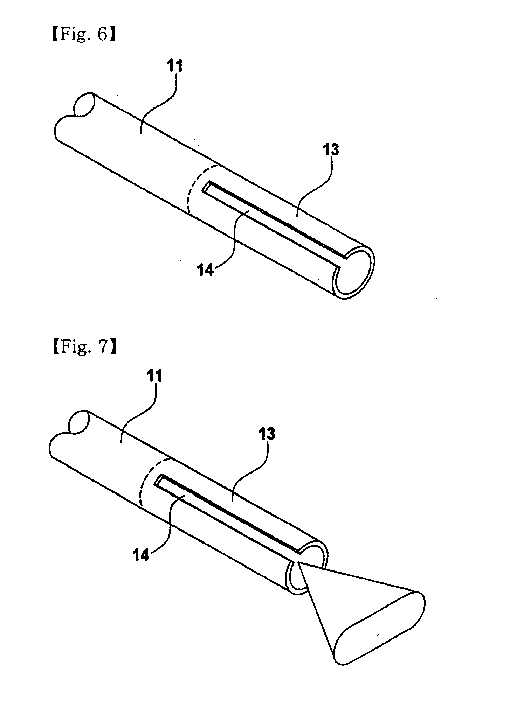

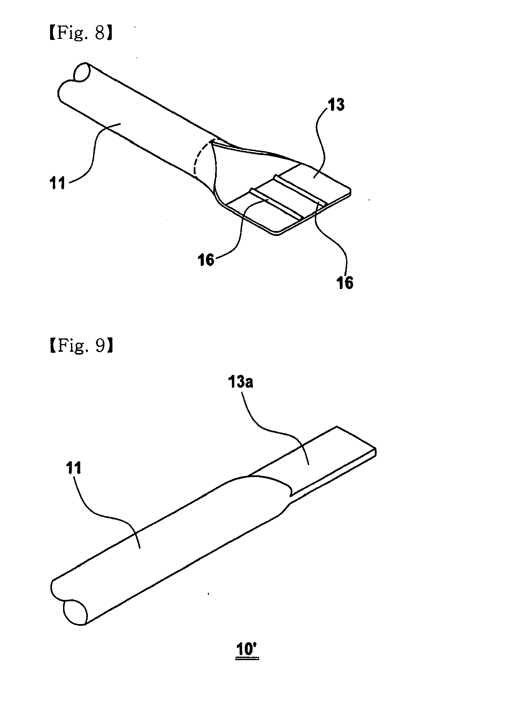

The hollow steel pipe goes through flattening operation, thus forming the brackets 12' and 13' such that they are integrated with the body 11. The flattening operation is performed as follows. That is, sheared areas 14 (see, FIGS. 4 to 7) each having a predetermined length are formed in the longitudinal direction of the body 11, and are expanded by an expander 15 (see, FIG. 7), and thereafter are forged, thus forming the brackets 12' and 13'. As an alternative to this method, the brackets may be formed through pressing without the necessity of forming the sheared areas 14, as shown in FIG. 9.

In order to facilitate the above-mentioned flattening operation, it is preferable that the brackets 12' and 13' not be heat treated. However, if heat treatment is required, it is preferable that the heat treatment be performed after the brackets have been formed.

Further, in order to allow the impact beam 10 to be easily attached to a vehicle (automobile) and firmly maintain the attached state, support ribs 16 may be attached to the brackets 12' and 13'. The support ribs 16 have a shape corresponding to that of the surface of the vehicle (automobile) to which the impact beam is mounted.

FIG. 4 is a flowchart illustrating a method of manufacturing the automobile impact beam integrated with brackets using a sheared-area forming step and FIGS. 5 to 8 are perspective views showing impact beams which are processed according to respective steps of FIG. 4.

Hereinafter, the method of manufacturing the automobile impact beam integrated with the brackets by forming the sheared areas will be described with reference to FIG. 3 and FIGS. 5 to 8.

The method of manufacturing the automobile impact beam integrated with the brackets by forming the sheared areas 14 is as follows. As shown in FIG. 5, at the heat treatment step S1, the central area of the hollow steel pipe forming the body 11 of the impact beam 10 is heat treated so as to maximize rigidity and impact absorbing ability. Preferably, opposite ends 12 and 13 of the hollow steel pipe are not heat treated, to facilitate the subsequent flattening operation.

Next, as shown in FIG. 6, at the bracket-area shearing step S2, the sheared areas 14 are formed in the opposite ends 12 and 13 of the hollow steel pipe forming the brackets in such a way as to have a predetermined length in the longitudinal direction of the hollow steel pipe. That is, a tool, which has a concave part corresponding to the shape of each sheared area 14, is inserted into the hollow steel pipe. In such a state, a convex part corresponding to the concave part is pressed at the exterior, so that part of the hollow steel pipe is removed, thus forming the sheared area 14.

After the sheared areas 14 are formed at step S2, as shown in FIG. 7, the wedged expander 15 is inserted into the opening of each of the ends 12 and 13 of the hollow steel pipe in which the sheared areas 14 are formed. Thereafter, the expander 15 is pressed to expand the sheared areas 14, thus forming the brackets 12' and 13'. Next, a forging operation for smoothing a surface may be additionally performed, at bracket-area expanding step S3.

After the brackets 12' and 13' have been formed at step S3, as shown in FIG. 8, the support ribs 16 are attached to surfaces of the brackets 12' and 13', at the support-rib forming step S4. The support ribs 16 function to firmly attach the impact beam 10 to the automobile. Thus, the shape of the support ribs 16 corresponds to that of the surface to which the brackets 12' and 13' of the automobile impact beam 10 are attached, without being limited to the shape of FIG. 8.

FIG. 9 is a perspective view showing an impact beam 10', according to a modification.

Referring to FIG. 9, a bracket 13a is formed through pressing without forming the sheared area on the outer circumferential surface of the hollow steel pipe. In this case, the bracket is formed by overlapping the outer circumferential surface of the hollow steel pipe, so that the strength of the bracket is doubled.

In the case of the impact beam 10' of FIG. 9, the body 11 is heat treated so as to improve strength, impact resistance and impact absorbing ability, as shown in FIG. 4. Further, after the pressing operation is performed, a forging operation for providing a flatter surface, a heat treatment operation, and a support-rib attaching operation may be performed.

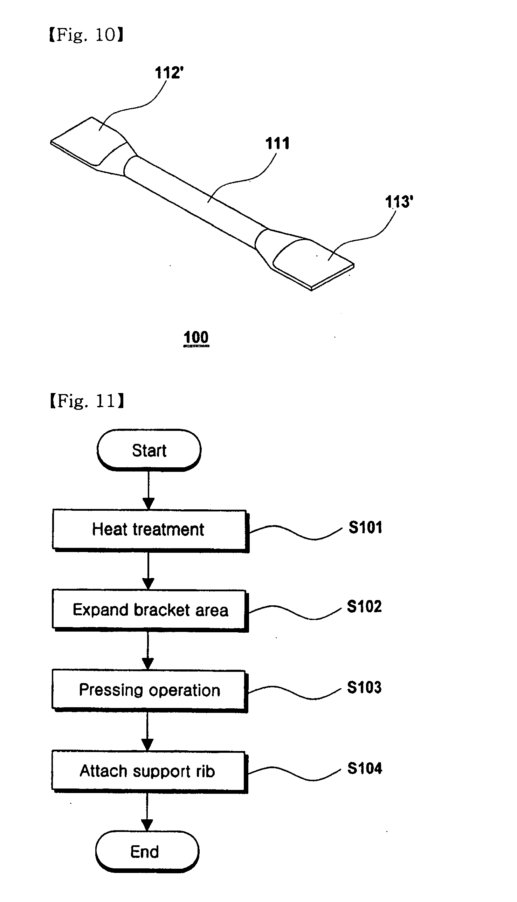

FIG. 10 is a perspective view showing an automobile impact beam integrated with brackets through expanding and pressing.

As shown in FIG. 10, the automobile impact beam 100 comprises a hollow steel pipe. The area of the hollow steel pipe which is heat treated forms a body 111. Opposite ends of the body 111 are expanded and pressed, thus forming brackets 112' and 113'. Thereby, the brackets are integrated with the body in a single structure.

In order to realize lightness of the impact beam 100, the impact beam 100 is manufactured using the hollow steel pipe. The impact beam is not limited to a specific cross-section, but it is preferable that the impact beam has a circular or elliptical cross-section. More preferably, the impact beam has an elliptical cross-section so as to have high impact resistance and superior impact absorbing ability. Further, the area of the hollow steel pipe corresponding to the body 111 is heat treated so as to maximize rigidity and impact absorbing ability.

Next, areas which are not heat treated are expanded and pressed, so that the brackets 112' and 113' are formed integrally with the body 111.

In a detailed description, the opposite ends 112 and 113 of the hollow steel pipe forming the brackets 112' and 113', and a bracket area 114, which is formed between heat-treated areas of the hollow steel pipe and is not heat treated, are expanded through hydro forming or a similar operation. After the expansion is completed, the expanded bracket area 114 is cut along a cutting line 115. Thereafter, the expanded areas formed by the opposite ends 112 and 113 of the heat-treated area are pressed, thus forming the brackets 112' and 113'.

The brackets 112' and 113' may be heat treated so as to maximize rigidity and impact absorbing ability after the pressing operation is completed. Further, support ribs 116, corresponding to the surface of a vehicle (automobile) to which the impact beam is to be attached, may be attached to the brackets 112' and 113' so as to allow the impact beam 100 to be easily attached to the vehicle (automobile) and firmly maintain the attached state.

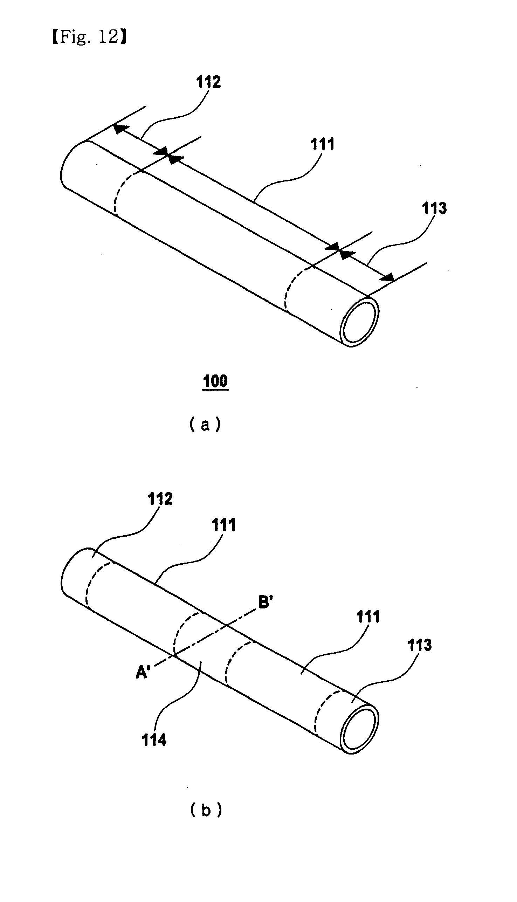

FIG. 11 is a flowchart illustrating a method of manufacturing the automobile impact beam integrated with brackets through expanding and pressing and FIGS. 12 to 15 are perspective views showing each state of a hollow steel pipe for forming the impact beam according to respective steps of FIG. 11.

Hereinafter, the method of manufacturing the automobile impact beam integrated with the brackets through expanding and pressing is described with reference to FIGS. 10 to 15.

The method of manufacturing the automobile impact beam integrated with the brackets through expanding and pressing according to the present invention is performed as follows. That is, as shown in FIG. 11, at the heat treatment step S101, the area of the hollow steel pipe forming the body 111 of the impact beam 100 is heat treated to maximize rigidity and impact absorbing ability. The opposite ends 112 and 113 of the hollow steel pipe and the bracket area 114, which is provided between the heat-treated areas and is not heat treated, are not heat treated, to facilitate the subsequent expanding operation.

FIG. 12 shows a hollow steel pipe which is heat treated at step S101. FIG. 12b shows the heat treated state, when ,according to the present invention, the central area of the hollow steel pipe forms the bracket area 114 and opposite sides of the bracket area 114 form bodies 111.

After the heat treatment step S101 has been terminated, the opposite ends 112 and 113 and the bracket area 114 of the hollow steel pipe, which are not heat treated, are expanded through hydro forming or a similar expanding operation, at the expanding step S 102.

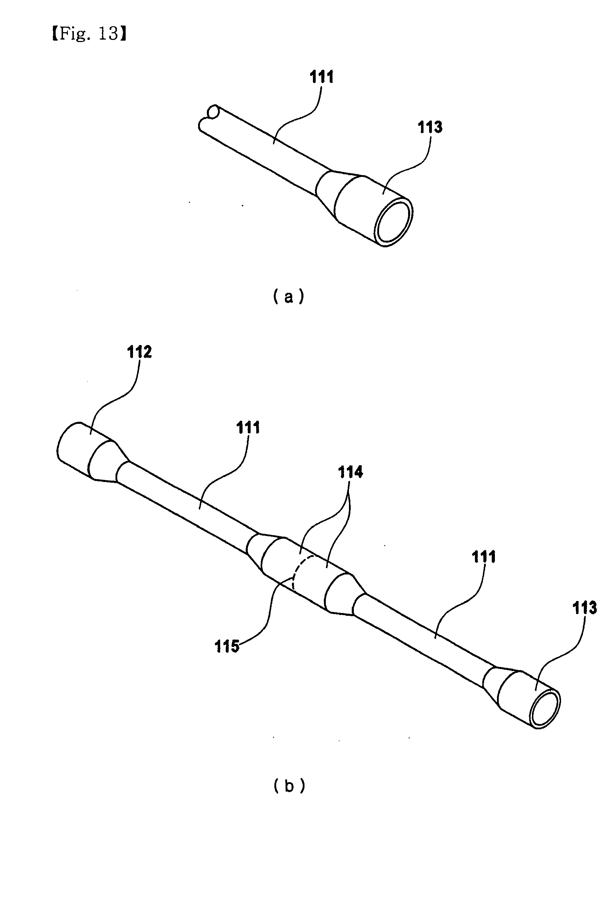

FIG. 13 shows the opposite ends 112 and 113 and the bracket area 114 of the hollow steel pipe, which are expanded at step S102 and are not heat treated. In this case, FIG. 13a shows the state where the end 113 of the hollow steel pipe is expanded. FIG. 13b shows the state where the opposite ends 112 and 113 of the hollow steel pipe and the bracket area 114, provided in the center of the hollow steel pipe, are expanded.

After the expanding operation has been performed at step S102, the expanded ends 112 and 113 are pressed, thus forming the brackets 112' and 113' (bracket forming operation). In the case of having the expanded bracket area, a cutting operation is performed along the cutting line 115 of the center of the bracket area 114. The expanded bracket area 114 is cut to form the expanded ends 112 and 113 of the body 111. Preferably, the bracket area 114 is twice as long as the bracket 112' or 113', thus allowing the brackets provided on opposite ends of the heat-treated body 111 to have the same length through cutting. In this case, the cutting operation may be performed after the expanded bracket area 114 is pressed, at step S103.

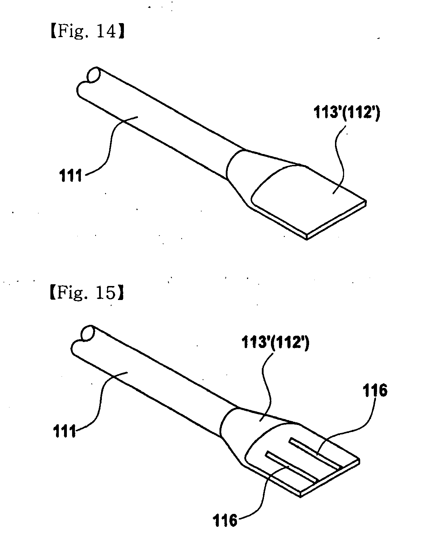

FIG. 14 is a view showing the bracket 113' integrated with the body 111 through pressing at step S103.

After the brackets 112' and 113' are formed on the opposite ends of the body 111 at step S103, as shown in FIG. 15, the support ribs 116 are attached to the surface of each of the brackets 112' and 113', at the support-rib forming step S104. The support ribs 116 function to firmly attach the impact beam 100 to an automobile. To this end, the support ribs 16 have a shape corresponding to that of the surface to which each of the brackets 112' and 113' of the automobile impact beam 100 is to be mounted. Thus, the support ribs 116 may have various shapes, and are not limited to the shape of FIG. 15.

### Industrial Applicability

As described above, the present invention allows an impact beam, which is mounted to a door to increase impact resistance and impact absorbing ability against external impacts acting on a vehicle, to be easily manufactured, and is usefully applicable to the automobile industry.

## Claims

1. A method of manufacturing an automobile impact beam integrated with brackets, comprising
a) a heat treatment step (S101) of heat treating an area of a hollow steel pipe (111), which forms a body of the impact beam;
b) an expanding step (S102) of expanding an area (112, 113, 112', 113', 114) of the hollow steel pipe other than the area which forms the body through the heat treatment;
c) a bracket forming step of forming the brackets (112, 113, 112', 113') integrated with the heat-treated area by pressing the area expanded through the expanding step, wherein the bracket forming step further comprises:
c1) a cutting step of cutting an expanded and preferably subsequently pressed bracket area (114) between at least two non heated reas of the hollow steel pipe.

2. The method according to claim 1, wherein the bracket forming step further comprises:
d) a support-rib forming step of forming a support rib (116) on a surface of each of the brackets which are formed through pressing.

## Patentansprüche

1. Verfahren zum Herstellen eines mit Bügeln integrierten Kraftfahrzeugstoßträgers bzw. Kraftfahrzeugaufprallschutzes, umfassend:
(a) einen Wärmebehandlungsschritt (S101) des Wärmebehandelns eines Bereiches eines Hohlstahlrohres (111), der einen Körper des Stoßträgers bzw. Aufprallschutzes bildet;
(b) einen Expandierschritt (S102) des Expandierens eines Bereiches (112, 113, 112', 113', 114) des Hohlstahlrohres, der nicht der Bereich ist, der durch die Wärmebehandlung den Körper bildet;
(c) einen Bügelbildungsschritt des Bildens der mit dem wärmebehandelten Bereich integrierten Bügel (112, 113, 112', 113') durch Pressen des durch den Expandierschritt expandierten Bereiches, wobei der Bügelbildungsschritt des Weiteren umfasst:
(c1) einen Schneideschritt des Schneidens eines expandierten und vorzugsweise anschließend gepressten Bügelbereiches (114) zwischen wenigstens zwei nicht erwärmten Bereichen des Hohlstahlrohres.

2. Verfahren nach Anspruch 1, wobei der Bügelbildungsschritt des Weiteren umfasst:
(d) einen Stützrippenbildungsschritt des Bildens einer Stützrippe (116) an einer Oberfläche eines jeden der Bügel, die durch Pressen gebildet sind.

## Revendications

1. Procédé de fabrication d'une poutre d'impact pour véhicule automobile à supports intégrés, comprenant
a) une étape de traitement thermique (S101) traitant thermiquement une zone d'un tube d'acier creux (111), qui forme un corps de la poutre d'impact ;
b) une étape d'expansion (S102) étendant une zone (112, 113, 112', 113', 114) du tube d'acier creux autre que la zone qui forme le corps par le traitement thermique ;
c) une étape de formation de support formant les supports (112, 113, 112', 113') intégrés à la zone thermiquement traitée en comprimant la zone étendue par l'étape d'expansion, pour lequel l'étape de formation de support comprend en outre :
c1) une étape de découpe découpant une zone de support (114) étendue et de préférence ensuite comprimée entre au moins deux zones non chauffées du tube d'acier creux.

2. Procédé selon la revendication 1, pour lequel l'étape de formation de support comprend en outre :
d) une étape de formation de nervure de support formant une nervure de support (116) sur une surface de chacun des supports qui sont formés par compression.
